# EUROPÄISCHE PATENTSCHRIFT

(11) **EP 0 562 130 B1**
(45) Veröffentlichungstag und Bekanntmachung des Hinweises auf die Patenterteilung: **15.05.1996**
(21) Anmeldenummer: 92104936.7
(22) Anmeldetag: 21.03.1992
(51) Int. Cl.: B23K 37/06, B23K 9/04

(54) **Vorrichtung zum Auftragsschweissen**
Build-up welding device
Dispositif pour la soudure à superposition

(43) Veröffentlichungstag der Anmeldung: 29.09.1993
(73) Patentinhaber: MTU MOTOREN- UND TURBINEN-UNION MÜNCHEN GMBH, D-80976 München (DE)
(72) Erfinder: Meier, Reinhold, W-8250 Dorfen (DE); Ostermair, Johannes, W-8062 Ainhofen (DE); Kerger-Knilling, Karl, W-8000 München 50 (DE)

(56) Entgegenhaltungen:
- DD-A- 211 985
- DD-A- 224 520
- DE-U- 8 424 296
- FR-A- 2 478 511
- US-A- 4 657 171

## Beschreibung

Die Erfindung betrifft eine Vorrichtung zum Auftragsschweißen auf Stirnflächen von Bauteilen mit einer Heizeinrichtung zum Aufschmelzen des Schweißgutes und zum Anschmelzen der Stirnfläche und einer Einrichtung zum Aufbringen des Schweißgutes, wobei Formwerkzeuge beiderseits der Stirnfläche angeordnet sind und mittels Andruckmechaniken der Seitenkontur der Stirnflache angepaßt sind und zum formgebenden Stützen und Verdichten des Auftragsschweißgutes im erschmolzenen und heißplastischen Zustand über den Rand der Stirnfläche hinausragen.

Aus DE G-84 24 296 ist eine derartige Vorrichtung bekannt, bei der Formwerkzeuge beiderseits der Stirnflachen eines Substrats zum formgebenden Stützen eines Schweißgutes angeordnet sind, um auf dem Substrat zwischen den Formwerkzeugen ein Bauteil schweißtechnisch herzustellen.

Im Falle von Reparaturverfahren werden Bauteile, deren Stirnfläche im Betrieb erhöhtem Verschleiß ausgesetzt sind, mittels Auftragsschweißen und Nachbearbeiten wie Fräsen, Schleifen und Polieren des aufgetragenen Schmelzgutes wiederhergestellt. Besonders beim Betrieb von Triebwerken unterliegen Dichtspitzen von Labyrinthdichtungen und Stirnflächen von Triebwerksschaufeln oder Schaufeldeckbändern einem hohen Verschleiß und müssen vor einer Wiederverwendung auftragsgeschweißt und nachbearbeitet werden. Aus US-PS 4,657,171 ist ein Reparaturverfahren für beispielsweise Dichtspitzen von Labyrinthdichtungen bekannt, bei dem zunächst die beschädigte Dichtspitze bis auf einen Stumpf abgetragen wird. Auf diesen Stumpf werden Schmelzraupen mittels Auftragsschweißen aufgebracht, deren Überhang nach Erkalten der Schmelzraupen spanabhebend oder schleifend zur Wiederherstellung der ursprünglichen Seitenkontur der Dichtspitze nachbearbeitet wird und schließlich die ursprüngliche Stirnfläche der Dichtspitze durch Nachbearbeitung wiederhergestellt wird. Bei diesem Verfahren wird nachteilig ein größeres Volumen an Schweißgut verbraucht als es zur Wiederherstellung der ursprünglichen Kontur erforderlich wäre. Außerdem sind die Nachbearbeitungsschritte zeitaufwendig und kostenintensiv.

Aufgabe der Erfindung ist es deshalb eine gattungsgemäße Vorrichtung anzugeben mit der ein Auftragsschweißen zum Aufbringen von Schutzbelägen auf Stirnflächen oder zur Reparatur abgearbeiteter Stirnflächen ermöglicht wird, bei dem sich der Zeit- und Kostenaufwand für Nachbearbeitungsschritte vermindert oder vollständig erübrigt.

Gelöst wird diese Aufgabe dadurch, daß die Vorrichtung Kopierelemente in Form von unterhalb der Stirnfläche angeordneten Kopierrollen zur Abtastung der Stirnflächenkontur aufweist.

Mit dieser Vorrichtung wird vorteilhaft das aufgebrachte Auftragsschweißgut durch die Formwerkzeuge im schmelzflüssigen Zustand gestützt und noch im heißplastischen Zustand der Kontur der Stirnfläche durch Verdichten mittels der Formwerkzeuge angepaßt, so daß ein Überhang des Auftragsschweißgutes ausgeschlossen ist. Das Verdichten erfolgt dabei durch Anpressen oder Bewegen der Formteile gegen die Seitenflächen des Bauteils im Bereich der Stirnfläche, wobei zur Begrenzung des Anpreßweges der senkrecht zur Tangente auf die Stirnfläche ausgerichteten Bewegung, die Vorrichtung Kopierelemente aufweist, die unterhalb der Stirnfläche in Form von Kopierrollen zur Abtastung der Stirnflächenkontur angeordnet sind. Diese Kopierrollen sind nicht nur für eine schmiedende oder hämmernde Bewegung von Stempel- oder Backenpaaren vorteilhaft einsetzbar, sondern auch zur Steuerung und Führung des Anpreßdruckes von Walzenpaaren. Die Vorrichtung ermöglicht vorteilhaft, daß das Bauteil an seiner Stirnfläche übergangslos in Bezug auf die Seitenkontur ohne Nachbearbeitung reparierbar wird und lediglich die der Nachbearbeitung leicht zugängliche Stirnfläche überarbeitet werden muß.

Vorzugsweise werden als Formwerkzeuge Walzen-, Stempel- oder Backenpaare eingesetzt. Durch die paarweise Anordnung der Walzen, Stempel oder Backen wird vorteilhaft erreicht, daß die Stirnfläche gleichzeitig wie in einer Spannvorrichtung gehalten wird.

Bei einer bevorzugten Ausbildung der Erfindung sind die Formwerkzeuge zum formgebenden Verdichten des heißplastischen Schweißgutes entlang der Stirnfläche in tangentialer Richtung zur Seitenkontur relativ zur Stirnfläche bewegbar angeordnet. Diese relative Bewegbarkeit zwischen Stirnfläche des Bauteils und den Formwerkzeugen hat den Vorteil, daß sich die formgebenden Flächen der Formwerkzeuge nur über einen minimalen Bereich der Stirnfläche erstrecken müssen. Die formgebenden Flächen können deshalb nur geringfügig größer ausgebildet sein als ihr Einwirkungsbereich auf das erschmolzene und heißplastische Schweißgut auf der Stirnfläche des Bauteils. Eine bevorzugte Ausbildung der Erfindung weist deshalb als Formwerkzeug Walzenpaare auf.

Die Bewegbarkeit läßt sich sowohl durch einen Verschiebemechanismus für das Bauelement und damit der Stirnfläche, als auch durch einen Nachführmechanismus der Auftragsschweißvorrichtung mit den Formwerkzeugen bei örtlich fixiertem Bauteil erreichen. Dabei wird dem Verschiebemechanismus des Bauteils besonders bei rotationssymmetrischen Bauteilen wie Dichtspitzen von Labyrinthdichtungen in Triebwerken oder dünnen Bauteilen wie Verdichterschaufeln in Triebwerken der Vorzug gegeben, da die Vorrichtung weniger aufwendige Positioniereinrichtungen und Bewegungsantriebe erfordert.

Während die Walzenpaare sich an der Stirnflächenkontur abstützend das heißplastische Schweißgut formgebend walzen, können vorzugsweise Stempel- oder Backenpaare auch dazu eingesetzt werden, das heißplastische Schweißgut hämmernd oder schmiedend zu verdichten. Dazu werden in einer bevorzugten Ausbildung der Vorrichtung die Formwerkzeuge senkrecht zur tangentialen Richtung entlang der Seitenkontur der Stirnfläche beweglich angeordnet. Als Antrieb mit verstellbarer Krafteinwirkung auf das heißplastische Material eignen sich pneumatische, elektromechanische oder hydromechanische Antriebe.

Zum formgebenden Schmieden oder Formhämmern weisen die Formwerkzeuge vorzugsweise entsprechend ausgebildete Finnenformen auf. Druckkraft und Schlagfrequenz der Finnen in einer senkrechten Richtung zur Tangente an die Seitenkanten der Stirnfläche sind dabei einstellbar und werden den Erfordernissen des Schweißgutes angepaßt. Als Antrieb für diese Bewegung werden vorzugsweise pneumatische oder elektromechanische Antriebseinrichtungen eingesetzt.

In einer weiteren bevorzugten Ausbildung der Erfindung bestehen die Formwerkzeuge aus Kupfer oder hochwarmfesten Werkstoffen. Kupfer hat zwar einen relativ niedrigen Schmelzpunkt, aber vorteilhafterweise eine hohe Wärmeleitfähigkeit, so daß Kupfer als bevorzugter Werkstoff für aktiv gekühlte Formwerkzeuge mit Finnen aus hochwarmfesten Werkstoffen eingesetzt wird. In einer derartigen Ausbildung der Erfindung stehen die Formwerkzeuge mit einer Kühleinrichtung in Wirkverbindung.

Hochwarmfeste Werkstoffe oder Graphit werden vorteilhaft als Werkstoff für nicht aktiv gekühlte Walzen-, Stempel- oder Backenpaare eingesetzt, da ihre Schmelz-, Sublimations- oder Zersetzungstemperatur so ausgewählt werden kann, daß sie oberhalb der Schmelztemperatur des Schweißgutes liegt.

Das Schweißgut, das auf die Stirnseite eines Bauteils aufzuschweißen ist, kann zwischen den Formwerkzeugen als Metallschweißpulver aufgebracht werden. Dazu weist die Vorrichtung vorzugsweise eine Dosiereinrichtung auf, so daß in Abhängigkeit von der Breite der Stirnfläche und von der Höhe des aufzutragenden Schweißgutes aus der Dosiereinrichtung eine angepaßte Metallschweißpulvermenge dem Schweißbad zwischen den Formwerkzeugen zugeführt werden kann.

Eine andere bervorzugte erfindungsgemäße Vorrichtung sieht vor, daß das Schweißgut als Schweißdraht mittels automatischer Schweißdrahtnachführeinrichtung im Einwirkungsbereich der Formwerkzeuge aufbringbar ist. Bei dieser Vorrichtung wird vorteilhaft die Nachführgeschwindigkeit dem Schweißgutbedarf automatisch angepaßt.

Eine besonders bevorzugte Ausbildung der Vorrichtung weist als Heizeinrichtung einen Schweißbrenner mit Laserstrahler auf. Diese Vorrichtung hat den Vorteil, daß die Energiezufuhr für das Anschmelzen der Stirnfläche und für das Erschmelzen des Schmelzgutes räumlich abgegrenzt und thermisch abgestimmt für kleinste Abmessungen der Stirnfläche erfolgen kann. Dazu wird die Laserintensität des Laserstrahlers derart begrenzt, daß keine Verdampfungseffekte an Stirnfläche oder Schweißgut auftreten. Ferner wird durch Bauteil- und Laserstrahlführung die Schweißzone scharf abgegrenzt und falls erforderlich der Laserstrahl mehrfach gerastert oder getaktet über die Schweißzone geführt.

Außerdem kann das Rasterprogramm für den Laserstrahl so abgestimmt werden, daß der Laserstrahler eine dosierte Energiezufuhr für die folgenden drei Heizzonen liefert. In einer Vorwärmezone auf der Stirnfläche ist die Energiezufuhr so dosiert, daß ein Abdampfen von Verunreinigungen erfolgen kann. In einer Schweißzone wird die Stirnfläche angeschmolzen und das Schweißgut beim Auftragen erschmolzen und in einer Nachwärm- oder Temperzone, in der die Formwerkzeuge formgebend und verdichtend einwirken wird ein heißplastischer Zustand des Materials kurzzeitig aufrechterhalten.

Die Heizeinrichtung kann einen Plasmabrenner oder einen Mikroplasmabrenner oder einen WIG-Schweißbrenner aufweisen. Wobei der Mikroplasmabrenner zum Auftragsschweißen vorteilhaft für besonders fein strukturierte Stirnflächen eingesetzt wird und WIG-Schweißbrenner oder Plasmabrenner bei größeren Schweißgutvolumina Anwendung finden.

Eine bevorzugte Weiterbildung der Vorrichtung weist Positioniereinrichtungen zur Einstellung der Lage von Heizeinrichtung, der Lage der Einrichtung zum Aufbringen des Schweißgutes und der Lage der Formwerkzeuge relativ zur Lage der Stirnfläche des Bauteils auf. Mit diesen Positioniereinrichtungen, die numerisch gesteuert werden können, ist der Vorteil der Massenbearbeitung von reparaturbedürftigen Bauteilen verbunden. Die Vorrichtung ist vorzugsweise für ein Auftragsschweißen von Stirnflächen unterschiedlichster Seitenkontur dünnwandiger Bauteile vorgesehen, bei diesen Bauteilen ist bisher das Auftragsschweißen mit einem hohen Nachbearbeitungsaufwand verbunden, der bei Verwendung der erfindungsgemäßen Vorrichtung vermindert wird; denn zunächst wurde die ursprüngliche Seitenkontur zerstört, weil eine Auftragsschmelzraupe nach der anderen auf die dünne Stirnfläche aufgebracht wurde und anschließend war die ursprüngliche Seitenkontur durch Abarbeiten der Schmelzüberhänge der Auftragsschmelzraupen wiederherzustellen. Bei Einsatz der erfindungsgemäßen Vorrichtung wird die Seitenkontur mittels der Formwerkzeuge beim Auftragsschweißen unmittelbar wiederhergestellt.

Eine besonders bevorzugte Verwendung der Vorrichtung besteht in der Reparatur mittels Auftragsschweißen von Stirnflächen an Dichtspitzen oder Stirnflächen an Triebwerksschaufeln oder an Deckbändern von Triebwerksschaufeln. Die nachzubearbeitenden Seitenkonturen sind teilweise schwer zugänglich, so daß derartige Bauteile wie Triebwerkswellen mit schadhaften Dichtspitzen oder Laufschaufelscheiben mit beschädigten Labyrinthdichtungen oder Triebwerksschaufeln mit Schäden an Deckbandsegmenten vorzeitig zu verschrotten sind, die bei Verwendung der erfindunggemäßen Vorrichtung vorteilhaft wiederhergestellt werden können.

Die folgenden Figuren zeigen Ausführungsbeispiele der Vorrichtung, wobei, der Einfachheit halber, die Kopierelemente nicht immer gezeigt werden.
- Fig. 1: zeigt einen Schnitt durch eine Vorrichtung zum Auftragsschweißen mit Backenpaar als Formwerkzeug,
- Fig. 2: zeigt einen Schnitt durch eine Vorrichtung zum Auftragsschweißen mit Walzenpaar als Formwerkzeug,
- Fig. 3: zeigt eine Draufsicht auf eine Vorrichtung zum Auftragsschweißen mit Walzenpaarhalterung,
- Fig. 4: zeigt einen Schnitt durch eine Vorrichtung zum Auftragsschweißen mit Stempelpaar als Formwerkzeug und Kopierollen,
- Fig. 5: zeigt eine Draufsicht auf eine Vorrichtung zum Auftragsschweißen mit Stempelpaar zum Schmieden.

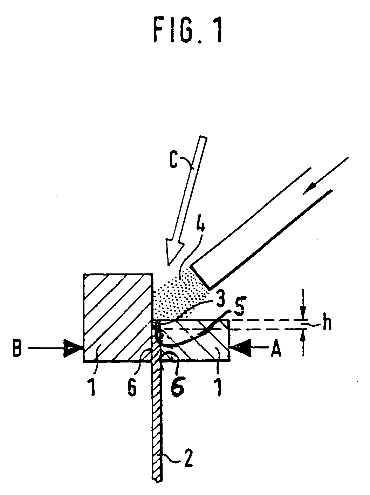

Fig. 1 zeigt einen Schnitt durch eine Vorrichtung zum Auftragsschweißen mit Backenpaar 1 als Formwerkzeug, das in Pfeilrichtung A,B auf das Bauteil 2, eine dünnwandige Verdichterschaufel eines Triebwerks, gedrückt wird. Dabei wird das Bauteil 2 zwischen dem Backenpaar 1 eingespannt und das Schweißgut 3 unter Schutzgas 4 in einer Höhe h von beispielsweise 1,5 mm auf die Stirnfläche 5 des Bauteils 2 aufgebracht. Die Heizeinrichtung (nicht dargestellt) wirkt in Pfeilrichtung C auf die schmelzgutfreie Stirnfläche 5 (vor der Bildebene), das erschmolzene Schweißgut (vor der Bildebene) und teilweise noch auf das heißplastische oder teigige Schweißgut 3 in der Bildebene, während die Finnen 6 oder Andruckflächen des Backenpaares 1 das heißplastische Schweißgut 3 formgebend verdichten. Dazu sind die Finnen 6 kufenförmig oder keilförmig in tangentialer Richtung zur Seitenkontur der Stirnfläche 5 des Bauteils 2 ausgebildet. Durch den Druck auf das Backenpaar 1 in Pfeilrichtung A, B wird das Schweißgut 3 in heißplastischem Zustand beim Auftragsscheißen unter gleichzeitigem Durchziehen des Bauteils 2 durch das Backenpaar 1 verdichtet.

Das Schweißgut 3 wird in diesem Beispiel von einer Dosiereinrichtung (nicht dargestellt) in Form von Metallschweißpulver zugeführt und mit einem Laserstrahler (nicht dargestellt) aufgeheizt.

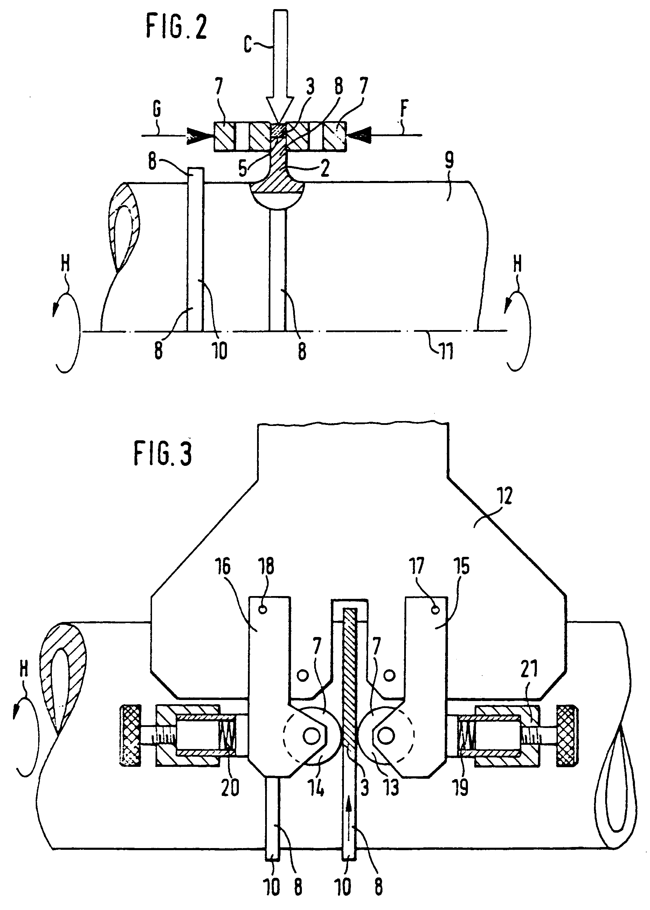

Fig. 2 zeigt einen Schnitt durch eine Vorrichtung zum Auftragsschweißen mit Walzenpaar 7 als Formwerkzeug. Das Schweißgut 3 wird im heißplastichen Zustand unmittelbar nach der Auftragsschweißung durch den Walzendruck in Pfeilrichtung F, G formgebend verdichtet, wozu sich das Walzenpaar 7 auf der Seitenkontur der Stirnfläche 5 des Bauteils 2 abstützt.

Die Heizquelle bildet in diesem Beispiel ein Mikroplasmabrenner (nicht dargestellt) und das Schweißgut wird mittels automatischer Schweißdrahtzuführeinrichtung (nicht dargestellt) auf die Stirnfläche gebracht und damit in Pfeilrichtung C ein gesteuertes Auftragsschweißen bewirkt. Das Bauteil 2 sind Dichtspitzen 8 auf einer Triebwerkswelle 9, die zu einer Labyrinthdichtung gehören. Betriebsbedingte Beschädigungen erforderten eine Wiederherstellung der Dichtspitzen 8. Dazu wird die Stirnfläche abgetragen bis ein gleichmäßiger Dichtspitzenansatz 10 auf der Triebwerkswelle 9 stehen bleibt. Auf die Stirnfläche 5 dieses Dichtspitzenansatzes 10 wird anschließend mit der beschriebenen Vorrichtung die Dichtspitze 8 durch Auftragsschweißen in ihrer Seitenkontur wiederhergestellt und abschließend die Stirnfläche der Auftragsschweißung auf die ursprüngliche Höhe der Dichtspitze 8 abgearbeitet.

Die Triebwerkswelle 9 wird beim Auftragsschweißen um ihre Achse 11 in Pfeilrichtung H gedreht.

Fig. 3 zeigt eine Draufsicht auf eine Vorrichtung zum Auftragsschweißen mit Walzenpaarhalterung 12. Jede Walze 13, 14 des Walzenpaares 7 wird von einem Arm 15, 16 der drehbar um eine Achse 17, 18 gelagert ist gehalten. Auf jeden Arm 15, 16 wirkt eine Andruckfeder 19, 20 deren Federkraft einstellbar ist. Mit der Federkraft wird eine Andruckkraft senkrecht auf die Tangente zur Seitenkante der Stirnfläche 5 auf das heißplastische Schmelzgut 3 ausgeübt, so daß beim Auftragsschweißen die Seitenkontur wiederhergestellt wird.

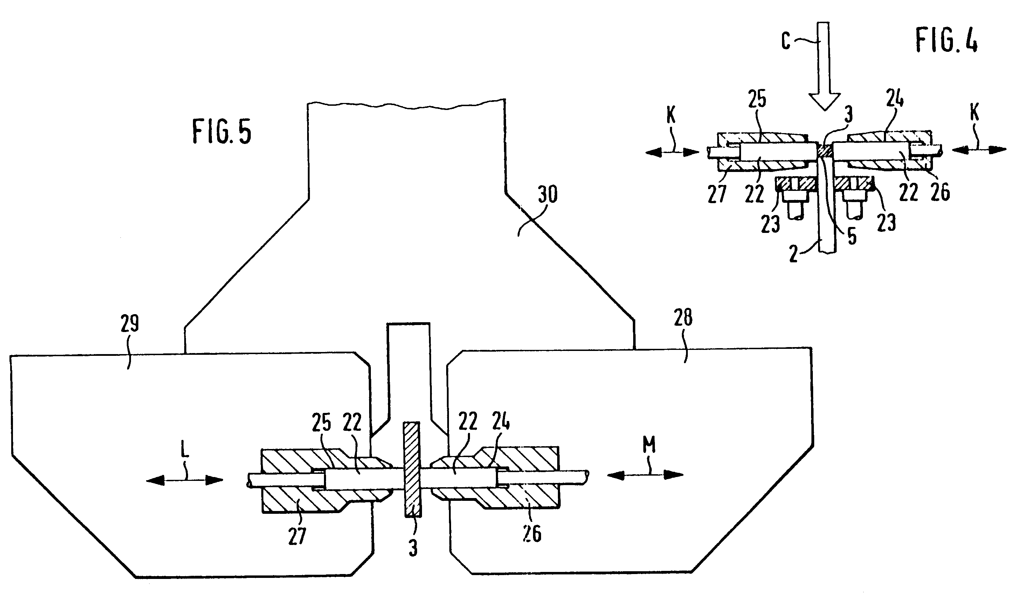

Fig. 4 zeigt einen Schnitt durch eine Vorrichtung zum Auftragsschweißen mit Stempel paar 22 als Formwerkzeug und Kopierollen 23. Die Stempel 24, 25 sind in einer Stempelführungshülse 26, 27 gleitend gelagert und wirken hämmernd oder schmiedend auf das heißplastische Schweißgut 3 zur formgebenden Verdichtung ein. Dazu wird in Pfeilrichtung K in senkrechter Richtung zur Tangente der Seitenkontur der Stirnfläche 5 des Bauteils 2 eine schwingende, vibrierende oder hämmernde Kraft mit einer Taktfrequenz von 5 Hz bis 10 kHz auf den Stempel 24, 25 ausgeübt. Gleichzeitig wird die Schwingungsamplitude durch die Kopierrollen 23, die die Seitenkontur des Bauteils 2 abtasten und mit dem Schwingungserreger oder Vibrator in Wirkverbindung stehen, begrenzt, so daß die ursprüngliche Seitenkontur des Bauteils 2 wiederhergestellt wird.

Der Pfeil C gibt die Einwirkungsrichtung eines WIG-Schweißbrenners mit automatischer Schweißdrahtnachführeinrichtung im Brennerkopf auf den Auftragsschweißbereich der Stirnfläche 5 an.

Fig. 5 zeigt eine Draufsicht auf eine Vorrichtung zum Auftragsschweißen mit Stempel paar 22 zum Schmieden. Jeder Stempel 24,25 ist mit seiner Führungshülse 26,27 auf einem Träger 28, 29 befestigt. Jeder Träger 28, 29 weist einen Schwingungsgenerator oder einen Vibrator auf, der in Pfeilrichtung L, M auf die Stempel 24, 25 einwirkt und das heißplastische Schweißgut formgebend verdichtet. Die Schwingungsgeneratoren oder Vibratoren sind gekoppelt, so daß die Stempel 24, 25 synchron oder wechselseitig auf das Schmelzgut einwirken. Beim wechselseitigen Einwirken der Stempel 24,25 verharrt ein Stempel des Stempelpaares 22 in seiner Arbeitsposition abgestützt auf einer Seitenkante der Stirnseite, während der andere Stempel schmiedet und anschließend wechselt die Funktionsweise der Stempel 24,25. Eine Tragplatte 30 nimmt beide Träger 28, 29 auf und bildet auch den Halter für die Kopierrollen 23 aus Fig. 4.

## Patentansprüche

1. Vorrichtung zum Auftragsschweißen auf Stirnflächen (5) von Bauteilen (2) mit einer Heizeinrichtung zum Anschmelzen der Stirnfläche (5) und zum Aufschmelzen des Schweißgutes (3) und einer Einrichtung zum Aufbringen des Schweißgutes (3) , wobei Formwerkzeuge (1,7,22) beiderseits der Stirnfläche (5) angeordnet sind und mittels Andruckmechaniken der Seitenkontur der Stirnfläche (5) angepaßt sind und zum formgebenden Stützen und Verdichten des Auftragsschweißgutes (3) im erschmolzenen und heißplastischen Zustand über den Rand der Stirnfläche (5) hinausragen, dadurch gekennzeichnet, daß die Vorrichtung Kopierelemente (23) in Form von unterhalb der Stirnfläche (5) angeordneten Kopierrollen zur Abtastung der Stirnflächenkontur aufweist.

2. Vorrichtung nach Anspruch 1, dadurch gekennzeichnet, daß Formwerkzeuge (1,7,22) zum formgebenden Verdichten des heißplastischen Schweißgutes (3) entlang der Stirnfläche (5) in tangentialer Richtung zur Seitenkontur relativ zur Stirnfläche (5) bewegbar angeordnet und vorzugsweise Walzenpaare (7) sind.

3. Vorrichtung nach einem der Ansprüche 1 oder 2, dadurch gekennzeichnet, daß die Formwerkzeuge (1,7,22) zum formgebenden und verdichtenden Schmieden oder Pressen des heißplastischen Schmelzgutes (3) senkrecht zur tangentialen Richtung entlang der Seitenkontur der Stirnfläche (5) beweglich angeordnet und vorzugsweise Stempel- (22) oder Backenpaare (1) sind.

4. Vorrichtung nach einem der Ansprüche 1 bis 3, dadurch gekennzeichnet, daß die Formwerkzeuge (1,7,22) aus Kupfer oder einem hochwarmfesten Werkstoff bestehen.

5. Vorrichtung nach einem der Ansprüche 1 bis 4, dadurch gekennzeichnet, daß das Schweißgut (3) als Metallschweißpulver mittels Dosiereinrichtungen im Einwirkungsbereich der Formwerkzeuge (1,7,22) aufbringbar ist.

6. Vorrichtung nach einem der Ansprüche 1 bis 5, dadurch gekennzeichnet, daß das Schweißgut (3) als Schweißdraht mittels automatischer Schweißdrahtnachführeinrichtungen im Einwirkungsbereich der Formwerkzeuge (1,7,22) aufbringbar ist.

7. Vorrichtung nach einem der Ansprüche 1 bis 6, dadurch gekennzeichnet, daß die Heizeinrichtung einen Schweißbrenner mit Laserstrahler aufweist.

8. Vorrichtung nach einem der Ansprüche 1 bis 7, dadurch gekennzeichnet, daß die Heizeinrichtung einen Plasmabrenner oder einen Mikroplasmabrenner oder einen WIG-Schweißbrenner aufweist.

9. Vorrichtung nach einem der Ansprüche 1 bis 8, dadurch gekennzeichnet, daß die Formwerkzeuge (1,7,22) mit einer Kühleinrichtung in Wirkverbindung stehen.

10. Vorrichtung nach einem der Ansprüche 1 bis 9, dadurch gekennzeichnet, daß die Stempel -(22) oder Backenpaare (1) Finnenformen zum Formhämmern aufweisen.

11. Vorrichtung nach einem der Ansprüche 1 bis 10, dadurch gekennzeichnet, daß die Stempel -(22) oder Backenpaare (1) mit pneumatischen oder elektromechanischen Antriebseinrichtungen zum Schmieden in Wirkverbindung stehen.

12. Vorrichtung nach einem der Ansprüche 1 bis 11, dadurch gekennzeichnet, daß sie Positioniereinrichtungen zur Einstellung der Lage von Heizeinrichtung der Lage der Einrichtung zum Aufbringen des Schweißgutes und der Lage der Formwerkzeuge (1,7,22) relativ zur Lage der Stirnfläche (5) des Bauteils aufweist.

13. Verwendung der Vorrichtung nach einem der Ansprüche 1 bis 12 zur Reparatur mittels Auftragsschweißen von Stirnflächen (5) unterschiedlichster Seitenkontur dünnwandiger Bauteile.

14. Verwendung der Vorrichtung nach einem der Ansprüche 1 bis 12 zur Reparatur mittels Auftragsschweißen von Stirnflächen (5) an Dichtspitzen oder Stirnflächen (5) an Triebwerksschaufeln oder an Deckbändern von Triebwerksschaufeln.

## Claims

1. Device for the build-up welding on faces (5) of components (2) with a heating apparatus for the melting of the face (5) and the melting on of the welding material (3), and a device for applying the welding material (3), forming tools (1, 7, 22) being arranged on both sides of the face (5) and fitted to the side contour of the face (5) by means of pressing mechanisms and protruding over the edge of the face (5) for the shaping support and compression of the build-up welding material (3) in the molten and hot plastic state, characterised in that the device has copying elements (23) in the form of duplicating rollers arranged under the face (5) for scanning the face contour.

2. Device according to claim 1, characterised in that forming tools (1, 7, 22) for the shaping compression of the hot plastic welding material (3) are arranged movably along the face (5) in a direction tangential to the side contour relative to the face (5) and are preferably pairs of rollers (7).

3. Device according to one of claims 1 or 2, characterised in that the forming tools (1, 7, 22) for the shaping and compressive forging or pressing of the hot plastic welding material (3) are arranged movably perpendicular to the tangential direction along the side contour of the face (5) and are preferably pairs of stamps (22) or jaws (1).

4. Device according to one of claims 1 to 3, characterised in that the forming tools (1, 7, 22) are made from copper or a high-temperature material.

5. Device according to one of claims 1 to 4, characterised in that the welding material (3) can be applied as metal welding powder by means of dosing devices in the working region of the forming tools (1, 7, 22).

6. Device according to one of claims 1 to 5, characterised in that the welding material (3) can be applied as welding wire by means of automatic welding wire feeders in the working region of the forming tools (1, 7, 22).

7. Device according to one of claims 1 to 6, characterised in that the heating apparatus has a welding torch with a laser.

8. Device according to one of claims 1 to 7, characterised in that the heating apparatus has a plasma torch or a micro-plasma torch or a WIG welding torch.

9. Device according to one of claims 1 to 8, characterised in that the forming tools (1, 7, 22) are operatively connected to a cooling device.

10. Device according to one of claims 1 to 9, characterised in that the pairs of stamps (22) or jaws (1) have pane shapes for hammering to shape.

11. Device according to one of claims 1 to 10, characterised in that the pairs of stamps (22) or jaws (1) are operatively connected to pneumatic or electromechanical drive devices for forging.

12. Device according to one of claims 1 to 11, characterised in that it has positioning devices for adjusting the position of the heating apparatus, the position of the device for applying the welding material and the position of the forming tools (1, 7, 22) relative to the position of the face (5) of the component.

13. Use of the device according to one of claims 1 to 12 for repairing different side contours of thin-walled components by means of build-up welding of faces (5).

14. Use of the device according to one of claims 1 to 12 for repairs to sealing points or faces (5) on drive blades or on cover bands of drive blades by means of build-up welding of faces (5).

## Revendications

1. Dispositif de soudage à superposition sur les faces frontales (5) de pièces (2) comprenant une installation de chauffage pour faire fondre la surface frontale (5) et le métal d'apport (3) ainsi qu'une installation pour appliquer le métal d'apport (3), des outils de formage (1, 7, 22) prévus de part et d'autre de la surface frontale (5) en étant adaptés contre les contours latéraux de la surface frontale (5) par des mécanismes de pression, pour soutenir et compacter avec mise en forme le métal d'apport (3) en superposition, à l'état fondu et plastique chaud, dépassant du bord de la surface frontale (5), caractérisé en ce que le dispositif comporte des éléments de copiage (23) sous la forme de galets de copiage placés sous la surface frontale (5) pour détecter le contour de la surface frontale.

2. Dispositif selon la revendication 1, caractérisé en ce que l'outil de formage (1, 7, 22) pour comprimer, avec mise en forme, le métal d'apport (3) à l'état plastique chaud, est monté mobile le long de la surface frontale (3) dans la direction tangentielle au contour latéral, par rapport à la surface frontale (5), cet outil étant de préférence constitué par une paire de cylindres (7).

3. Dispositif selon l'une des revendications 1 ou 2, caractérisé en ce que les outils de formage (1, 7, 22) pour le forgeage ou le travail à la presse, avec compression et mise en forme du métal d'apport (3) à l'état plastique chaud, sont montés mobiles perpendiculairement à la direction tangentielle le long du contour latéral de la surface frontale (5), ces outils étant de préférence des paires de poinçons (22) ou de mors (1).

4. Dispositif selon l'une des revendications 1 à 3, caractérisé en ce que les outils de formage (1, 7, 22) sont en cuivre ou en un matériau très réfractaire.

5. Dispositif selon l'une des revendications 1 à 4, caractérisé en ce que le métal d'apport (3) est appliqué sous forme de poudre de métal d'apport par des installations de dosage dans la zone d'action des outils de formage (1, 7, 22).

6. Dispositif selon l'une des revendications 1 à 5, caractérisé en ce que le métal d'apport (3) est appliqué sous forme de fil de soudure, par des installations d'alimentation automatique en fil de soudure, dans la zone active des outils de formage (1, 7, 22).

7. Dispositif selon l'une des revendications 1 à 6, caractérisé en ce que l'installation de chauffage comprend une torche avec un faisceau laser.

8. Dispositif selon l'une des revendications 1 à 7, caractérisé en ce que l'installation de chauffage comprend une torche à plasma ou une microtorche à plasma ou une torche à tungstène et à gaz protecteur.

9. Dispositif selon l'une des revendications 1 à 8, caractérisé en ce que les outils de formage (1, 7, 22) coopèrent avec une installation de refroidissement.

10. Dispositif selon l'une des revendications 1 à 9, caractérisé en ce que les paires de poinçons (22) ou de mors (1) présentent des formes de queues de marteau pour réaliser la mise en forme par martelage.

11. Dispositif selon l'une des revendications 1 à 10, caractérisé en ce que les paires de poinçons (22) ou de mors (1) comportent des installations d'entraînement pneumatiques ou électromagnétiques pour forger.

12. Dispositif selon l'une des revendications 1 à 11, caractérisé en ce qu'il comprend des installations de positionnement pour régler la position de l'installation de chauffage, celle de l'installation fournissant le métal d'apport et celle des outils de formage (1, 7, 22) par rapport à la position de la surface frontale (5) de la pièce.

13. Application du dispositif selon l'une des revendications 1 à 12, pour réparer par soudage à superposition de surface frontale (5) de pièces à parois minces ayant un contour latéral très différent.

14. Application du dispositif selon l'une des revendications 1 à 12, pour réparer par soudage à superposition, les surfaces frontales (5) de pointe d'étanchéité ou de surfaces frontales (5) d'aubes de moteur ou de bandes de recouvrement d'aubes de moteur.
